Europäisches Patentamt

European Patent Office

Office européen des brevets

(19)

(11) **EP 1 280 108 A2**

(12) **EUROPÄISCHE PATENTANMELDUNG**

(43) Veröffentlichungstag:
     **29.01.2003 Patentblatt 2003/05**

(51) Int Cl.7: **G06T 15/00**

(21) Anmeldenummer: **02016178.2**

(22) Anmeldetag: **20.07.2002**

(84) Benannte Vertragsstaaten:
     **AT BE BG CH CY CZ DE DK EE ES FI FR GB GR
     IE IT LI LU MC NL PT SE SK TR**
     Benannte Erstreckungsstaaten:
     **AL LT LV MK RO SI**

(30) Priorität: **23.07.2001 DE 10136988**

(71) Anmelder: **Egisys AG
     72074 Tübingen (DE)**

(72) Erfinder: **Hüttner, Tobias, Dr.
     71126 Gäufelden (DE)**

(74) Vertreter: **Patentanwälte
     Ruff, Wilhelm, Beier, Dauster & Partner
     Kronenstrasse 30
     70174 Stuttgart (DE)**

(54) **Verfahren zum serverunterstützten Erzeugen von komplexen Bildern**

(57) Gemäß des erfindungsgemäßen Verfahrens werden komplexe Bilder auf der Anzeigeeinheit einer Arbeitsstation angezeigt. Hierzu ist die Arbeitsstation mit wenigstens einem Server verbunden. In der Arbeitsstation werden Werte von Parametern erzeugt, die die anzuzeigenden Bilddaten beeinflussen. Die Werte der Parameter werden an den wenigstens einen Server übermittelt. Aufgrund der Werte der Parameter werden durch den wenigstens einen Server die anzuzeigenden Bilddaten ermittelt. Die ermittelten Bilddaten werden dann an die Arbeitsstation zurückgesandt. An der Arbeitsstation wird dann ein den Bilddaten entsprechendes Bild erzeugt und auf der Anzeigeeinheit angezeigt.

EP 1 280 108 A2

**Beschreibung**

Die vorliegende Erfindung betrifft ein Verfahren zum Erzeugen von komplexen Bildern auf einer Arbeitsstation mit einer Anzeigeeinheit zum Anzeigen des Bildes, wobei die Arbeitsstation mit wenigstens einem Server verbunden ist.

Soweit auf Computern komplexe Bilder bzw. Grafiken dargestellt werden, bedarf deren Erzeugung eines sehr hohen Rechenaufwandes. Daher werden üblicherweise an Arbeitsplatzgeräten die Computer mit Grafikkarten ausgerüstet, die in "Echtzeit" die Bilder bzw. die Ansteuersignale hierfür erzeugen. Die Anzeigeeinheit der Arbeitsstation wird üblicherweise mit den Ansteuersignalen beaufschlagt und generiert dann ein entsprechendes Bild. Die Rechenkapazität üblicher Grafikkarten reicht jedoch dann nicht aus, wenn komplexe Bildstrukturen anzuzeigen sind. Dies ist insbesondere dann der Fall, wenn die anzuzeigenden Bilder dreidimensionale Strukturen betreffen, wobei aus den vorgegebenen Strukturen zunächst einmal ermittelt wird, was überhaupt sichtbar ist und anschließend, wie das Sichtbare dargestellt wird. Dies gilt dabei insbesondere, wenn das Bild in seinem Bildraum sehr groß und mit großer Auflösung dargestellt ist und die Darstellung der zweidimensionalen Projektion des Bildes oder eines Ausschnittes davon großen Recherchenaufwand erfordert.

Derartige komplexe Bildstrukturen werden üblicherweise auf teilweise speziell dafür programmierten Servern verarbeitet. Zur Anzeige solch komplexer Strukturen liegen die Datensätze, aus denen das Bild berechnet wird, in einer vorgegebenen Struktur vor. Das Bild wird dann nach einem bestimmten Verfahren ermittelt, nämlich gerendert. Das Rendern ist ein Verfahren, bei dem zunächst aus einem Gitterdiagramm des anzuzeigenden Objektes aufgrund von Parametern ermittelt wird, wie die Projektion der dreidimensionalen Struktur auf die zweidimensionale Bildebene aussieht. Anschließend wird zu jeder vorhandenen Fläche, die von den Gitternetzlinien begrenzt wird, die sogenannte Textur ermittelt, also die Daten, mit denen diese Fläche ausgefüllt werden soll. Dabei enthält die Textur, wie sie in den Daten zu der Gitterstruktur abgespeichert ist, in sehr großer Auflösung Informationen, beispielsweise über die Farbe der Fläche. Aus den in sehr großer Auflösung existierenden Daten werden beim Rendern zur Anzeige des mit dieser Textur ausgefüllten Feldes auf der Anzeigeeinheit die Farbwerte der in diesem Feld enthaltenen Bildpunkte in Abhängigkeit von der Auflösung der Anzeigeeinheit und der Fläche bestimmt.

Derartige Renderverfahren finden üblicherweise dann Einsatz, wenn sehr große und komplexe Bildstrukturen, beispielsweise dreidimensionale Modelle von realen Topographien, wie sie insbesondere bei Umgebungs- und Landkarten Anwendung finden können, benötigt werden. Hier entsteht bei der Bildverarbeitung das Problem, dass die zu verarbeitenden Datensätze umfangreich sind.

Aus diesem Grund können derartige Bilder nur auf großen, hierauf spezialisierten Computern ermittelt werden. Dieses Problem verschärft sich dann noch, wenn das angezeigte Bild mit kurzen, der Echtzeit möglichst nahe kommenden Bildgenerierungszeiten ermittelt werden soll.

Aufgabe der Erfindung ist es daher ein Verfahren bereitzustellen, mit dem derart komplexe Bilder auf Arbeitsstationen angezeigt werden können, die nicht auf die Bildbearbeitung spezialisiert sind. Dabei soll es darüber hinaus gemäß dem erfindungsgemäßen Verfahren insbesondere auch ermöglicht werden, auf einer Vielzahl von derart nicht auf die Bildberechnung spezialisierten Arbeitsstationen mit ihren Anzeigeeinheiten unter Aufrechterhaltung kurzer Antwortzeiten derartig komplexe Bilder anzuzeigen.

Die der Erfindung zugrundeliegenden Aufgaben werden durch ein Verfahren gemäß dem unabhängigen Patentanspruch gelöst.

Nach dem erfindungsgemäßen Verfahren werden die komplexen Bilder auf der Anzeigeeinheit einer Arbeitsstation angezeigt. Hierzu ist die Arbeitsstation mit wenigstens einem Server verbunden. In der Arbeitsstation werden Werte von Parametern erzeugt, die die anzuzeigenden Bilddäten beeinflussen. Die Werte der Parameter werden an den wenigstens einen Server übermittelt. Aufgrund der Werte der Parameter werden durch den wenigstens einen Server die anzuzeigenden Bilddaten ermittelt. Die ermittelten Bilddaten werden dann an die Arbeitsstation zurückgesandt. An der Arbeitsstation wird dann ein den Bilddaten entsprechendes Bild erzeugt und auf deren Anzeigeeinheit angezeigt.

Bei den Arbeitsstationen handelt es sich dabei zumeist um herkömmliche Arbeitsstationen, wie sie als PC's allgemein üblich sind. Server sind in der Regel leistungsfähige Rechner bzw. Rechnersysteme, die Anfragen ihrer angeschlossenen Clients bzw. Arbeitsstationen geeignet bearbeiten.

Die Verbindung zwischen den Arbeitsstationen bzw. Clients und den Servern kann über ein Netzwerk, insbesondere das Internet erfolgen. Bei der Vernetzungsstruktur kann es sich aber auch um jede andere Vernetzung durch ein lokales oder über-lokales Netzwerk, sogenannte LAN's oder WAN's handeln. In Spezialfällen kann ein Client und ein Server auch als ein jeweiliger Prozess auf einem gemeinsamen Rechner ablaufen.

In den Arbeitsstationen selbst kann jeweils eine Grafik-Einheit, insbesondere eine Grafikkarte, vorhanden sein, die aufgrund von Bilddaten, die ihr zugeführt werden und die in einem Arbeitsspeicher oder einem gesonderten Speicher hierfür abgelegt sein können, die Ansteuersignale für die Anzeigeeinheit erzeugt und damit die Erzeugung des Bildes auf der Anzeigeeinheit bewirkt.

Gemäß einer weiterführenden Ausbildung der Erfindung werden die Werte der Parameter mittels eines Objekts, insbesondere eines Applets, erzeugt, welches in das von der Anzeigeeinheit angezeigte Bild eingebettet ist.

Das Applet ist insbesondere ein kurzes, in das anzuzeigende Bild eingebettetes Programmsegment, das aufgrund von durch den Benutzer der Arbeitsstation vornehmbaren Veränderungen des von der Anzeigeeinheit angezeigten Bildes die Werte der Parameter erzeugt. Dies kann beispielsweise dadurch geschehen, dass für zumindest einen Teil der Parameter auf dem Bildschirm je ein sogenannter Schieberegler - oder ein anderes Stellelement - graphisch simuliert wird. Das Verändern der Stellung des Schiebereglers erfolgt auf dem Bildschirm durch den Benutzer. Von dem Applet wird dann ein der Position des Schiebereglers zugeordneter Wert der Größe berechnet und ausgegeben.

Die Parameter bestimmen insbesondere eine Beobachterposition bezüglich des anzuzeigenden Objekts. Hierzu umfassen die Parameter vorzugsweise wenigstens eine der Größen Blickpunkt (Lage und Entfernung), Blickrichtung und/oder Neigungswinkel der Blickrichtung zur Horizontalen des Objektes.

Gemäß einer weiterführenden Ausgestaltung der Erfindung werden die Bilddaten in dem wenigstens einen Server durch Rendern ermittelt.

Für eine weiterführende Ausgestaltung der Erfindung weist der wenigstens eine Server wenigstens zwei Arbeitseinheiten auf. Jede dieser Arbeitseinheiten ist zur Erzeugung bzw. Ermittlung von Bilddaten geeignet und insbesondere hierzu dadurch besonders ausgebildet, dass ein zur Bilddatenberechnung dienender Prozessor, der auch speziell hierfür konstruiert sein kann, vorgesehen ist. Jedem dieser Prozessoren kann auch ein Zwischenspeicher, ein sogenannter Cache-Speicher, zur Verfügung stehen. Dieser Zwischenspeicher kann sowohl auf dem Prozessor selbst als auch in dessen Umgebung, beispielsweise auf einer gemeinsamen Platine, angeordnet sein. Gemäß der weiterführenden Ausgestaltung der Erfindung ist seitens des wenigstens einen Servers ein Portal vorgesehen. Das Portal kann als eine Logikeinheit innerhalb des wenigstens einen Servers ausgebildet sein. Das Portal übernimmt die Verteilung der beim Server eingehenden Parameter zur Bilddatenermittlung an eine der Arbeitseinheiten. Die Aufgabe des Portals beinhaltet auch die Zuordnung von Parametern zur Arbeitsstation für die Rückübermittlung der ermittelten Bilddaten an diejenige Arbeitsstation, von der die Parameter an den Server übermittelt wurden.

Es kann dabei vorgesehen sein, dass die Arbeitseinheiten auf eine gemeinsame Bibliothek von Berechnungsroutinen, insbesondere Renderroutinen, zur Ermittlung der Bilddaten zurückgreifen. Sie greifen jedoch insbesondere auch auf einen gemeinsamen Datensatz zurück, in dem das, insbesondere dreidimensionale, Urbild des anzuzeigenden Bildes abgelegt ist. Dieses Urbild umfasst insbesondere alle Daten, die erforderlich sind, um unter sämtlichen Blickwinkeln und Blickrichtungen das Objekt zu betrachten. Es weist eine möglichst große Auflösung auf.

Um die Antwortzeit des wenigstens einen Servers insbesondere bei einer großen Anzahl von Arbeitsstationen zu verringern und um unnötige Rechenarbeit im Bereich des Servers und damit die unnötige Belegung von Arbeitseinheiten des wenigstens einen Servers zu vermeiden, kann überprüft werden, ob in einem Zwischenspeicher zu dem gegebenen Zeitpunkt Bilddaten abgespeichert sind, die sich allenfalls unwesentlich von den aufgrund der vorliegenden Werte der Parameter zu erzeugenden Bilddaten unterscheiden. Diese Überprüfung kann beispielsweise im Portal durchgeführt werden. Es wird also überprüft, ob in einem Zwischenspeicher derzeit Bilddaten eines Bildes abgelegt sind, die aufgrund von Werten von Parametern ermittelt wurden, die zu einem früheren Zeitpunkt an den wenigstens einen Server übermittelt wurden, die im wesentlichen den aktuell übermittelten Werten der Parameter entsprechen. Neben dem jeweiligen Zwischenspeicher der Arbeitseinheiten kann hierfür auch ein gesonderter Speicher im Bereich des wenigstens einen Servers vorgesehen sein, in dem die Bilddaten abgespeichert sind, die bestimmten Werten der Parameter zugeordnet sind. Die bestimmten Werte der Parameter können dabei beispielsweise eine Anzahl der zuletzt vorangegangenen Übermittlungen der Werte der Parameter oder aber die Bilddaten besonders häufig vorkommender Werte der Parameter beinhalten. Beispielsweise wird im Portal des Servers dann ermittelt, ob im Bereich des Servers solche Bilddaten abgespeichert sind, die sich von den aufgrund der vorliegenden Werte der Parameter zu erzeugenden Bilddaten höchstens unerheblich unterscheiden.

Hierzu kann eine Metrik vorgesehen sein, die ein Maß für die Abweichung des Bildes aufgrund der übermittelten Werte der Parameter für das anzuzeigende Bild sowie aufgrund der Werte der Parameter abgespeicherter Bilddaten ermittelt. Unter Benutzung einer Fehlerschranke kann dann aus dem Maß der Abweichung ermittelt werden, ob ein erheblicher Unterschied zwischen den übermittelten Werten der Parameter und den Werten der Parameter eines abgespeicherten Bilddatensatzes besteht. Hierbei wird die Fehlerschranke in Abhängigkeit der Auflösung der Anzeigeeinheit der Arbeitsstation bestimmt, die die Parameter für das erzeugte Bild übermittelt hat. In Abhängigkeit der Bildauflösung kann ermittelt werden, ob ein anzuzeigendes Bild bei unterschiedlichen Parametern auch tatsächlich abweichende Bilddaten aufweisen würde. Eine Abweichung, die zu keinem sichtbaren Unterschied zwischen den Bilddaten führt, kann als unerheblich betrachtet werden. Unter der Verwendung der Metrik in Verknüpfung mit der Fehlerschranke kann somit von dem Portal in eindeutiger Weise anhand der Werte der Parameter der zu vergleichenden Bilddaten unterschieden werden, ob die zwei unterschiedlichen Bilddaten sich erheblich voneinander unterscheiden oder nicht.

Die vorstehenden und weiteren Merkmale der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird.

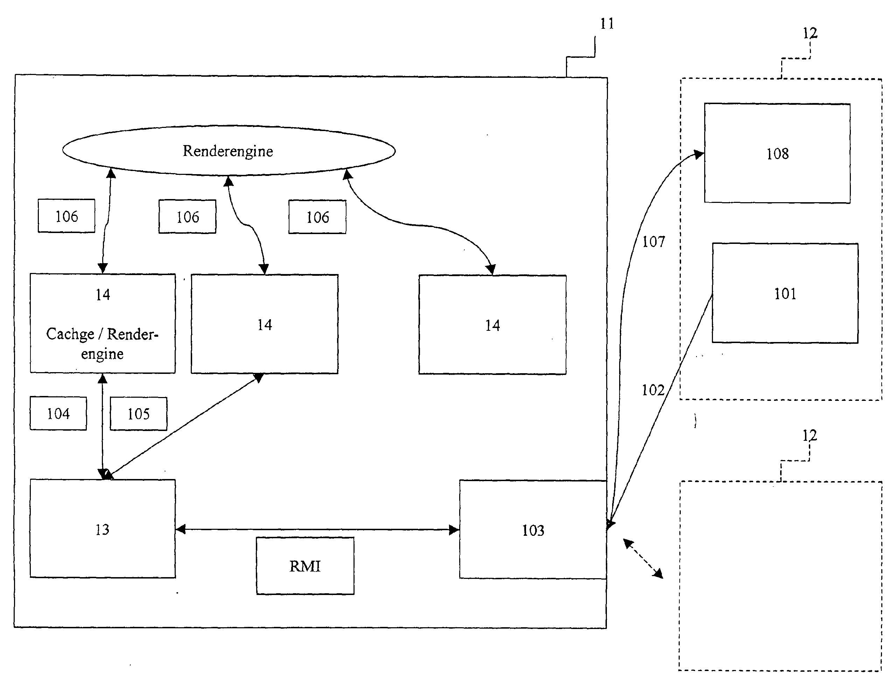

Im übrigen ist die Erfindung nachfolgend anhand des in der einzigen Figur dargestellten Ausführungsbeispieles näher erläutert. Die einzige Figur zeigt den Ablauf eines erfindungsgemäßen Verfahrens in schematischer Blockdarstellung. Dabei erfolgt die Verknüpfung zwischen der Arbeitsstation und dem wenigstens einen Server mittels des Internets, also einem Datennetz, das unter Verwendung des sogenannten TCP/IP-Protokolls arbeitet.

Gemäß einem ersten Schritt 101 des Verfahrens wird auf der Arbeitsstation ein Satz von Werten der Parameter erzeugt. Hierzu wird insbesondere ein eingebettetes Objekt, beispielsweise ein Applet, verwendet. Bei dem eingebetteten Objekt könnte es sich aber auch um eine HTML-Eingabeprimitive oder um ein Java-Script handeln.

Gemäß dem Schritt 102 wird nach dem Erzeugen der Werte der Parameter von der Arbeitsstation 12 eine Anforderung an den wenigstens einen Server 11 gesandt, der die Werte der Parameter beinhaltet. Hierzu wird die Vernetzung der Rechner untereinander genutzt. Dabei arbeitet das Protokoll des Netzwerkes insbesondere nach dem sogenannten TCP/IP-Protokoll. Bei der Anforderung handelt es sich insbesondere um einen sogenannten Request, einen http-Request.

Serverseitig werden die Parameterwerte gemäß dem Schritt 103 empfangen. Über ein Servlet oder beispielsweise über eine JSP-Seite (Java Server Page) werden die Parameterwerte der Anforderung entgegengenommen. Ein Portal 13 wird, beispielsweise über eine sogenannte RMI (Remote Method Invocation), aufgerufen. Das Portal 13 ist diejenige Einheit, welche die Ermittlung der Bilddaten kontrolliert. Das Portal 13 dient zur Koordination einzelner Arbeitseinheiten 14, die als Prozesse auf unterschiedlichen Prozessoren für die Bilddatenermittlung zur Verfügung stehen. Bevor eine Arbeitseinheit 14 von dem Portal 13 den Auftrag erhält, die Bilddaten zu den übermittelten Werten der Parameter zu ermitteln, wird überprüft, ob in einem Zwischenspeicher bzw. in einem Bildspeicher entsprechende Bilddaten zu einem anderen, ähnlichen Satz von Parametern bereits abgelegt sind und daher durch direkten Speicherzugriff abrufbar und rückübermittelbar sind. Hierzu wird eine Metrik verwendet, die dazu dient herauszufinden, ob sich ein Bild bzw. dessen Bilddaten nur unwesentlich von einem bereits abgespeicherten Bild unterscheidet.

In eine solche Metrik gehen insbesondere die Parameter der aktuellen Bilddaten, die Parameter der bereits erzeugten Bilder, sowie eine Fehlerschranke ein. Ein Satz von Werten der Parameter, also die Gruppe der Parameter insgesamt, kann dabei insbesondere wenigstens eine der folgenden Größen Blickpunkt, Blickrichtung und Neigungswinkel zur Horizontalen umfassen. Im wesentlichen bestimmen die Werte der Parameter die Beobachterposition des Beobachters bezüglich des Objekts, das auf dem Bild anzuzeigen ist. Darüber hinaus kann ein Parameterwert auch die Auflösung der Anzeigeeinheit der Arbeitsstation beinhalten. Im folgenden werden die Parameter des Blickpunkts mit Hilfe der Indizes x, y und z bezeichnet und die Parameter der Blickrichtung und des Neigungswinkels mit Hilfe der Indizes a bzw. b.

Eine einfache Metrik für die Ermittlung ist beispielsweise durch die Funktion

$$f\,(ex,\,ey,\,ez,\,ea,\,eb) = int\,(ex/tx) - bx +$$

$$int\,(ey/ty) - by +$$

$$int\,(ez/tz) - bz +$$

$$int\,(ea/ta) - ba +$$

$$int\,(eb/tb) - bb$$

gegeben, wobei tx, ty, tz, ta, tb Teiler-Konstanten, bx, by, bz, ba, bb die jeweiligen Parameterwerte der bereits gespeicherten Bilder bzw. deren Bilddaten und ex, ey, ez, ea, eb die Parameter der aktuellen Beobachterposition sind. Aus einem Blickpunkt (x, y, z) der Blickrichtung (a, b) ergibt sich ein entsprechender Parameterwert p mit dem Index x über die Beziehung px=int (x/tx), wobei die Funktion int der in der Programmiersprache C verwendeten Funktion entsprechen kann. Die Werte für die Parameter py, pz, pa und pb berechnen sich analog. Man überprüft dann, ob der Funktionswert der Metrik f(ex, ey, ez, ea, eb) für das aktuelle Bild mit den Parameterwerten ex, ey, ez, ea, eb kleiner als eine Fehlerschranke epsilon ist. In diesem Fall wird das Bild bzw. dessen Bilddaten mit den Parametern bx, by, bz, ba, bb aus dem Zwischenspeicher verwendet. Andernfalls muss das Bild durch Rendern neu ermittelt werden.

Das Ergebnis der Ermittlungen aufgrund der Metrik ist eine binäre Ja/Nein-Antwort auf die Frage, ob eines der bereits im Speicher abgelegten Bilder verwendet werden kann oder nicht. Kann ein bereits abgespeichertes Bild verwendet werden, so wird von dem Portal 13 der entsprechende Bilddatensatz an die Arbeitsstation 12 zurückübermittelt.

Gemäß dem Schritt 104 wird von dem Portal 13 in dem Falle, in dem die binäre Antwort Nein lautet und daher ein neues Bild berechnet bzw. gerendert werden muß, über RMI ein Zugriff auf eine der Arbeitseinheiten 14 erzeugt. In der Arbeitseinheit 14 werden die Bilddaten des neuen Bildes ermittelt. Hierzu kann gemäß dem Schritt 106 beispielsweise mittels JNI (Java Native Interface) auf die gemeinsam abgelegten Bilddaten des Urbildes, dessen Projektion auf die Bildebene ermittelt wird und als Bilddaten des zu erzeugenden Bildes zu berechnen sind, zurückgegriffen werden. Ebenfalls können die Arbeitseinheiten 14 auf diese Weise auf zentral abgelegte und durchgeführte Renderroutinen, die beispielsweise in C++ programmiert sind, eines sogenannten fly-away-Systems zugreifen. Das fly-away-System ermittelt die Bilddaten des zu erzeugenden Bildes, sobald von der entsprechenden Arbeitseinheit gemäß dem Schritt 106 die Anforderung und die erforderlichen Daten übermittelt worden sind. Das fly-away-System übermittelt die erzeugten Bilddaten dann wieder an die Arbeitseinheit 14 zurück. Gemäß dem Schritt 105 werden dann die Bilddaten an das Portal 13 zurückübermittelt, das diese beispielsweise über RMI an den Webserver weiterleitet. Von dem Webserver werden die Bilddaten, beispielsweise als HTML-Frame oder als JSP-Seite (Java Script Page), in einem Schritt 107 an die Arbeitsstation 12 zurückübermittelt, von der die Aufforderung ausgegangen war. Gemäß dem Schritt 108 wird nun die Anzeigeeinheit in der Arbeitsstation aufgrund der erhaltenen Bilddaten derart angesteuert, dass sie das entsprechende Bild anzeigt.

**Patentansprüche**

1. Verfahren zum Erzeugen eines komplexen Bildes auf einer Arbeitsstation (12) mit einer Anzeigeeinheit zum Anzeigen des Bildes, wobei die Arbeitsstation (12) mit wenigstens einem Server (11) verbunden ist, mit folgenden Schritten:

   - in der Arbeitsstation (12) werden Werte von Parametern erzeugt, die die anzuzeigenden Bilddaten beeinflussen,
   - die Werte der Parameter werden an den wenigstens einen Server (11) übermittelt,
   - aufgrund der Werte der Parameter werden durch den wenigstens einen Server (11) die anzuzeigenden Bilddaten ermittelt,
   - die Bilddaten werden an die Arbeitsstation (12) zurückgesandt und ein den Bilddaten entsprechendes Bild wird von der Arbeitsstation (12) erzeugt und auf deren Anzeigeeinheit angezeigt.

2. Verfahren nach Anspruch 1, **dadurch gekennzeichnet, dass** die Werte der Parameter mittels eines Objekts, insbesondere eines Applets, erfasst werden, welches in das von der Anzeigeeinheit anzuzeigende Bild eingebettet ist.

3. Verfahren nach Anspruch 1 oder 2, **dadurch gekennzeichnet, dass** die Parameter eine Beobachterposition bezüglich eines anzuzeigenden Objektes bestimmen.

4. Verfahren nach einem der vorhergehenden Ansprüche, **dadurch gekennzeichnet, dass** die Parameter wenigstens eine der Größen Blickpunkt, Blickrichtung und Neigungswinkel zur Horizontalen umfassen.

5. Verfahren nach einem der vorhergehenden Ansprüche, **dadurch gekennzeichnet, dass** die Bilddaten in dem wenigstens einen Server durch Rendern ermittelt werden.

6. Verfahren nach einem der vorhergehenden Ansprüche, **dadurch gekennzeichnet, dass** der wenigstens eine Server wenigstens zwei Arbeitseinheiten (14) aufweist, wobei jede dieser Arbeitseinheiten (14) zur Erzeugung von Bilddaten geeignet ist, wobei mittels eines serverseitigen Portals (13) die Parameter zur Bilddatenermittlung an eine der Arbeitseinheiten (14) verteilt werden.

7. Verfahren nach Anspruch 6, **dadurch gekennzeichnet, dass** die Arbeitseinheiten (14) auf eine gemeinsame Bibliothek von Berechnungsroutinen, insbesondere Renderroutinen, zur Ermittlung der Bilddaten zurückgreifen.

8. Verfahren nach einem der vorhergehenden Ansprüche, **dadurch gekennzeichnet, dass** anhand einer Metrik überprüft wird, ob in einem Zwischenspeicher, insbesondere einem einer Arbeitseinheit zugeordneten Bilddatenspeicher, Bilddaten abgespeichert sind, die sich nur unwesentlich von den aufgrund der vorliegenden Werte der Parameter zu ermittelnden Bilddaten unterscheiden, und falls sich die Bilddaten nur unwesentlich unterscheiden, die entsprechenden abgespeicherten Bilddaten an die Arbeitsstation zurückgesandt werden.

9. Verfahren nach Anspruch 8, **dadurch gekennzeichnet, dass** anhand der Metrik ein nur unerheblicher Unterschied erkannt wird, wenn die Abweichung zwischen den Werten der Parameter des anzuzeigenden Bildes und den Werten der Parameter des abgespeicherten Bildes unterhalb einer Fehlerschranke liegt.

10. Verfahren nach Anspruch 9, **dadurch gekennzeichnet, dass** die Fehlerschranke in Abhängigkeit von der Auflösung der Anzeigeeinheit der Arbeitsstation, die die Parameter für das zu erzeugende Bild übermittelt hat, bestimmt wird.

EP 1 280 108 A2